# EUROPÄISCHE PATENTANMELDUNG

(11) **EP 1 647 331 A1**
(43) Veröffentlichungstag der Anmeldung: **19.04.2006**
(21) Anmeldenummer: 05020336.3
(22) Anmeldetag: 19.09.2005
(51) Int. Cl.: B03B 9/06

(54) **Verfahren zum Sortieren von Baumischabfällen**

(30) Priorität: 13.10.2004 DE 102004050026
(71) Anmelder: Stadler Anlagenbau GmbH, 88361 Altshausen (DE)
(72) Erfinder: Kosch, Stefan, 46509 Xanten (DE); Stadler, Wilhelm, 88361 Altshausen (DE); Hüskens, Jürgen, 41748 Viersen (DE); Sigmund, Ulrich, 88326 Aulendorf (DE)
(74) Vertreter: Weiss, Peter

(57) **Zusammenfassung**

Bei einem Verfahren zum Sortieren von Baumischabfällen (1) und/oder Bauschutt (1), insbesondere Baustellenabfällen, soll automatisch der angelieferte Baumischabfall (1) und/oder Bauschutt .(1) zumindest einem Separator (17) zugeführt werden, wobei mittels Schall und/oder Energieimpuls und/oder zumindest einem Nahinfrarotsortiergerät (16) mineralische Stoffe von den noch enthaltenen nichtmineralischen Stoffen separiert werden oder alle nichtmineralischen Stoffe von den mineralischen Stoffen ausgeschieden werden.

## Beschreibung

Die Erfindung betrifft Verfahren zum Sortieren von Baumischabfällen und/oder Bauschutt, insbesondere Baustellenabfällen sowie eine Vorrichtung zum Durchführen des Verfahrens.

Bei herkömmlichen Verfahren und Vorrichtungen zur Sortierung von Baumischabfällen und Bauschutt werden diese Baumischabfälle in einer Vielzahl von unterschiedlichsten Sortieranlagen behandelt und dabei der aussortierte mineralische Anteil des Abfalls anschliessend im Baugewerbe oder in Deponien als Baumaterial eingesetzt.

Dabei sind die Einsatzgebiete beschränkt auf Gebiete, bei welchen der aussortiere mineralische Anteil keinen hohen Wert oder keine hohe Bedeutung oder keine hohe Qualität erfordert. Die nichtmineralischen Fraktionen bzw. Reste, die etwa 40% des Gewichtsanteiles ausmachen, werden je nach Art des Materials verwertet oder beseitigt.

Die Vorrichtungen, insbesondere Sortieranlagen für gemischte Bau- und Abbruchabfälle arbeiten herkömmlicherweise mit verschiedenen Sieben und Windsichterstufen, Magneten und daran angeschlossenen manuellen Sortierungen. Dort wird eine mechanisch vorbereitete Fraktion zur Separierung von mineralischen und nichtmineralischen Fraktionen manuell durchgeführt.

Die mineralischen Fraktionen bestehen immer aus unterschiedlichsten Inhaltsstoffen und unterschiedlichster Zusammensetzung, wobei daher eine Wertschöpfung aus dieser mineralischen Fraktion sehr gering ist. Daher ist der Einsatz dieser recycelten mineralischen Fraktion, bedingt durch die unterschiedliche und nicht einheitliche Zusammensetzung beschränkt. Zudem ist der Personalaufwand zum Sortieren viel zu hoch und wirtschaftlich kaum darstellbar.

Der vorliegenden Erfindung liegt daher die Aufgabe zugrunde, ein Verfahren sowie eine Vorrichtung zum Durchführen des Verfahrens zu schaffen, mit welchen auf einfache und kostengünstige Weise die Sortierkosten erheblich minimiert werden können und zum anderen die Qualität der separierten mineralischen Fraktionen deutlich verbessert werden kann. Zudem soll eine Separierung der mineralischen Fraktion in einzelne Materialarten vollautomatisch möglich sein.

Zur Lösung dieser Aufgabe führen die Merkmale der Kennzeichen der Patentansprüche 1 und 16.

Bei der vorliegenden Erfindung hat sich als vorteilhaft erwiesen, in einem ersten Verfahrensschritt Baumischabfälle und/oder Bauschutt, insbesondere Baustellenabfälle einer ein- oder mehrstufigen Absiebung zuzuführen, um hieraus bevorzugt eine Feinfraktion, eine Mittelkornfraktion und Grobfraktion zu separieren. Die Absiebung sowie die Separarierung der Baumischabfälle und/oder des Bauschuttes in einzelne Fraktionen ist nicht zwingend erforderlich zur Durchführung des erfindungsgemässen Verfahrens. Wichtig ist, dass bei der vorliegenden Erfindung durch entsprechende Separatoren, denen Nahinfrarotsortiergeräte vor- und/oder nachgeschaltet sind, aus dem vollständigen Materialstrom einzelne bestimmte Fraktionen heraussepariert werden oder nicht mineralische Stoffe herausgesondert werden können.

Ferner ist von Vorteil, dass derartige Separatoren bspw. mittels Schall und/oder Energieimpulsen den Baumischabfall und/oder den Bauschutt separieren. In einem derartigen Separator hat sich als besonders vorteilhaft erwiesen, die Sortiereinrichtungen, wie Nahinfrarotsortiergeräte und/oder nachzuschalten.

Dabei hat sich als vorteilhaft erwiesen, eine Feinfraktion im Korngrössenbereich von 0 mm bis 40 mm Durchmesser zu separieren, die dann über einen oder mehrere Windsichter in eine nichtmineralische Fraktion und eine oder mehrere mineralische Fraktionen separiert wird.

Die Mittelkornfraktion, die vorzugsweise einen Korngrössenbereich von etwa 40 mm bis 400 mm Durchmesser, vorzugsweise 40 mm bis 300 mm Durchmesser aufweist, wird in zwei Mittelkornfraktionen nochmals unterteilt, deren Korngrössenbereich von in etwa 40 mm bis 120 mm Durchmesser und einen zweiten Korngrössenbereich von in etwa 120 mm bis 400 mm, vorzugsweise 120 mm bis 300 mm Durchmesser aufweist. Diese Unterteilung kann beispielsweise ebenfalls mittels Absiebung erfolgen.

Die ersten und die zweite Mittelkornfraktion wird dann mittels einer Beschleunigungseinrichtung vergleichmässigt, wobei diese dann zumindest einen Separator, vorzugsweise einer Mehrzahl von in Reihe geschalteten Separatoren zugeführt wird. Dort wird dann aus dieser Mittelkornfraktion die nichtmineralische Fraktion separiert und die mineralische Fraktion in einzelne mineralische Fraktionen unterteilt, wodurch hierdurch verschiedene Fraktionen bzw. separate Stoffe, wie beispielsweise Beton, Kalk Sandstein, Ziegel, Klinker, Bimsstein od. dgl. in einer guten mineralischen Qualität heraussepariert werden. Dabei werden diese einzelnen Fraktionen in den jeweiligen einzelnen Separatoren heraussepariert. Bevorzugt ist ein Verfahren, welches mittels Schall und/oder Energieimpulsen eine Separierung durchführt, wobei ggf. an diesem Separator Nahinfrarotsortiergeräte vor- und/oder nachgeschaltet sind, die mineralische und/oder nichtmineralische Fraktionen vorher oder nachher noch zusätzlich herausseparieren können.

Auf die Art der Vorrichtung zum Separieren ist jedoch das Verfahren nicht beschränkt. Wichtig ist jedoch bei der vorliegenden Erfindung, dass die Mittelkornfraktion in eine erste und eine zweite Mittelkornfraktion unterteilt wird und dann aus diesen beiden Mittelkornfraktionen jeweils die nichtmineralische Fraktion separiert werden und dann die verbleibende mineralische Fraktion in einzelne separat verwertbare Inhaltsstoffe, wie Beton, Kalk Sandstein, Ziegel, Klinker oder Bimsstein separiert werden. Hierdurch werden einzelne mineralische Fraktionen unterschiedlicher Art einzeln separiert, die auch in unterschiedlichen Korngrössen resultierend aus der ersten oder zweiten Mittelkornfraktion vorliegen. Diese einzelnen separierten verschiedenen Stoffe lassen sich dann ganz anderen Verwertungen zuführen und sind daher in verschiedensten Gebieten als Rohstoffe einzeln verwertbar, wobei die Verwertung nicht, wie herkömmlich beispielsweise auf Baugewerbe und als Baumaterial für Deponien beschränkt ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Ansicht auf einzelne Verfahrensschritte zum Sortieren von Baumischabfällen und/oder Bauschutt, insbesondere Baustellenabfällen;
Figur 2 eine schematisch dargestellte Draufsicht auf einen Teil einer Vorrichtung zum Separieren des Baumischabfalls und/oder Bauschuttes mit einem Separator.

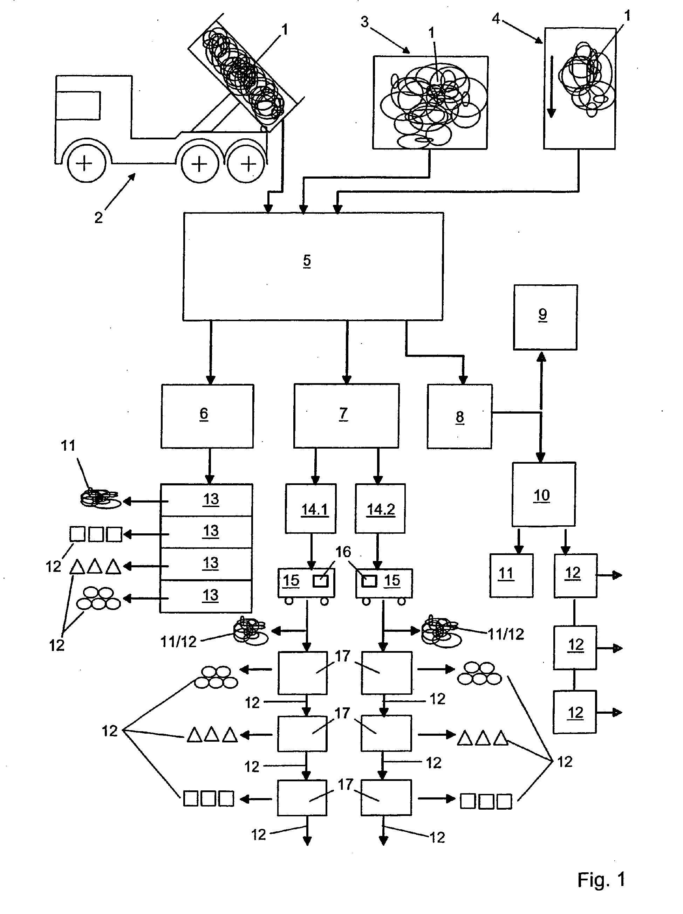

Gemäss Figur 1 wird beim vorliegenden Verfahren Baumischabfall 1 und/oder Bauschutt 1, insbesondere Baustellenabfälle auf unterschiedlichste Weise, beispielsweise mittels eines Fahrzeuges 2, einem Bunker 3 oder einer beliebigen Transporteinrichtung 4, Transportband od. dgl. im ggf. ersten Verfahrensschritt einer Absiebung 5 zugeführt. Aus der Absiebung 5, die als ein- oder mehrstufige Absiebung ausgebildet sein kann, werden unterschiedliche Korngrössen des Materials hergestellt. Aus der Absiebung 5 resultiert bevorzugt eine Feinfraktion 6, eine Mittelkornfraktion 7 sowie eine Grobfraktion 8.

Bei der vorliegenden Erfindung kann jedoch auch die Absiebung 5 entfallen und der Materialstrom, als Baumischabfall 1 und/oder Bauschutt 1 dann direkt einer Separierung, wie sie nachfolgend beschrieben ist, zugeführt werden.

Die Grobfraktion 8, deren Korngrösse von ca. 400 mm Durchmesser, vorzugsweise 300 mm Durchmesser und grösser anfällt, wird ggf. einer Zerkleinerungsstufe 9 zugeführt und kann dann erneut beispielsweise der Absiebung 5 zugeführt werden. Im Rahmen der vorliegenden Erfindung soll jedoch auch liegen, dass anstelle der Zerkleinerungsstufe 9 die Grobfraktion 8 einer separaten Separierung 10 zugeführt wird, aus welcher vorzugsweise mittels Schall und/oder Energieimpulsmessung oder anders arbeitenden Separatoren und/oder mittels Nahinfrarotsortiergeräten aus der Grobfraktion mineralische Stoffe, wie beispielsweise Beton, Kalk Sandstein, Ziegel, Klinker oder Bimsstein heraussepariert werden oder die nichtmineralischen Bestandteile aus dem Materialstrom separiert werden. Dabei kann im Anschluss an die Separierung 10 eine nichtmineralische Fraktion 11 oder zumindest eine mineralische Fraktion 12 resultieren, wobei im Rahmen der vorliegenden Erfindung liegen soll, dass durch eine Mehrzahl von in Reihe geschalteten Separatoren unterschiedliche mineralische Fraktionen 12, unterschiedlicher Art, wie beispielsweise Beton, Kalk Sandstein, Ziegel, Klinker, Bimsstein od. dgl. separat herausgewonnen werden können.

Die Feinfraktion 6 wird zur Separierung von einzelnen Mineralarten, wie Beton, Kalk Sandstein, Ziegel, Klinker, Bimsstein od. dgl. sowie bestehend aus Sanden, kleinen mineralischen Anteilen und Resten mittels hier angedeuteten Windsichtern 13 od. dgl. Trenneinrichtungen, Trenntischen und Siebe in einzelne mineralische Fraktionen 12 unterschiedlicher Materialart und nichtmineralische Fraktionen 11 separiert. Die Feinfraktion liegt vorzugsweise im Korngrössenbereich von 0 mm bis 40 mm Durchmesser.

Die Mittelkornfraktion 7 wird in eine erst Mittelkornfraktion 14.1 und eine zweite Mittelkornfraktion 14.2, vorzugsweise mittels Absiebung 5 unterteilt, wobei die erste Mittelkornfraktion 14.1 in Korngrössen von etwa 40 mm bis 120 mm Durchmesser und die zweite Mittelkornfraktion 14.2 in Korngrössen von etwa 120 mm bis 400 mm, vorzugsweise von 120 mm bis 300 mm Durchmesser unterteilt ist.

Bevorzugt werden die beiden Mittelkornfraktionen 14.1 und 14.2 einer Beschleunigungseinrichtung 15, insbesondere Beschleunigungsband zugeführt, welches in Geschwindigkeitsbereichen von 2 m bis 9 m pro Sekunde, vorzugsweise 3 bis 6 m/s das Material beschleunigt bzw. vergleichmässigt.

Der Beschleunigungseinrichtung 15, insbesondere dem Beschleunigungsband ist zumindest ein Nahinfrarotsortiergerät 16 zugeordnet, welches aus der ersten und zweiten Mittelkornfraktiön 14.1, 14.2 nichtmineralische Anteile bzw. nichtmineralische Fraktionen 11 aussortiert. Jedoch soll auch hier im Rahmen der vorliegenden Erfindung liegen, dass innerhalb der Beschleunigungseinrichtung 15 mittels zumindest eines Nahinfrarotsortiergerätes 16 auch aus der nichtmineralischen Fraktion 11 die mineralische Fraktion 12 separiert bzw. herausgetrennt wird.

Wird jedoch die nichtmineralische Fraktion 11 heraussepariert, so schliessen an die Beschleunigungseinrichtung 15 beider Mittelkornfraktionen 14.1, 14.2 eine Mehrzahl von Separatoren 17, vorzugsweise in Reihe geschaltet an, welche dann aus der verbleibenden mineralischen Fraktion 12 jeweils einzelne Fraktionen bzw. separate Stoffe, wie beispielsweise Beton, Kalk Sandstein, Ziegel, Klinker, Bimsstein od. dgl. in unterschiedliche Materialarten heraussepariert.

Diese liegen dann schon separiert in den jeweiligen Korngrössenbereichen von 40 mm bis 120 mm aus der ersten Mittelkornfraktion 14.1 und im Bereich von 120 mm bis 400 mm, vorzugsweise 120 mm bis 300 mm Durchmesser aus der zweiten Mittelkornfraktion 14.2 vor.

Auf diese Weise wird gewährleistet, dass mittels zumindest eines Separators 17 die mineralische Fraktion 12 in einzelne Materialarten bzw. einzelne Stoffe vollautomatisch separierbar ist und somit deutlich höhere Erlöse erzielt werden können.

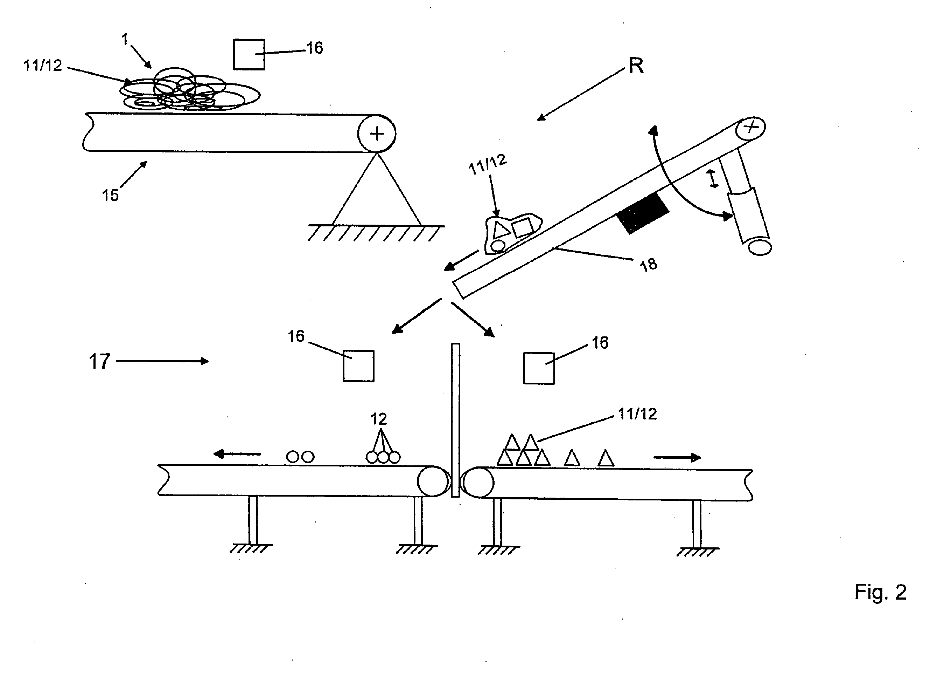

In dem Ausführungsbeispiel der vorliegenden Erfindung gemäss Figur 2 ist beispielsweise eine Beschleunigungseinrichtung 15 einer Vorrichtung R zum Separieren von Baumischabfällen und/oder Bauschutt aufgezeigt, bei welcher der Baumischabfall und/oder Bauschutt 1 auf eine Prallplatte 18 fällt und dort mittels Schall und/oder Energieimpuls eine nichtmineralische Fraktion 11 oder eine mineralische Fraktion 12 ermittelt wird, die dann durch entsprechendes Verschwenken der Prallplatte 18 die Fraktion in eine nichtmineralische Fraktion 11, ggf. enthaltend eine bestimmte mineralische Fraktion 12 und eine mineralische Fraktion 12 bestimmter Art bzw. eines bestimmten Stoffes separiert.

Dabei hat sich als vorteilhaft erwiesen, im Anschluss an die Separierung in eine nichtmineralische Fraktion 11 und mineralische Fraktion 12 der Vorrichtung R zumindest ein Nahinfrarotsortiergerät 16 nachzuschalten, um nochmals einzelne mineralische Fraktionen 12 mittels Druck-Luftimpulsen Schieber, umschaltbaren Öffnungen od. dgl. herauszuseparieren.

Ein entsprechende Vorsortierung kann jedoch auch schon im Bereich vor der Prallplatte 18 auf der Beschleunigungseinrichtung 15 erfolgen. Dies soll ebenfalls im Rahmen der vorliegenden Erfindung liegen.

### Bezugszeichenliste

| | | | | | |
|---|---|---|---|---|---|
| 1 | Baumischabfall u/o Bauschutt | 34 | | 67 | |
| 2 | Fahrzeug | 35 | | 68 | |
| 3 | Bunker | 36 | | 69 | |
| 4 | Transporteinrichtung | 37 | | 70 | |
| 5 | Absiebung | 38 | | 71 | |
| 6 | Feinfraktion | 39 | | 72 | |
| 7 | Mittelkornfraktion | 40 | | 73 | |
| 8 | Grobfraktion | 41 | | 74 | |
| 9 | Zerkleinerungsstufe | 42 | | 75 | |
| 10 | Separierung | 43 | | 76 | |
| 11 | nichtmineralische Fraktion | 44 | | 77 | |
| 12 | mineralische Fraktion | 45 | | 78 | |
| 13 | Windsichter | 46 | | 79 | |
| 14 | 1. und.2. Mittelkornfraktion | 47 | | | |
| 15 | Beschleunigungseinrichtung | 48 | | | |
| 16 | Nahinfrarotsortiergerät | 49 | | | |
| 17 | Separatoren | 50 | | | |
| 18 | Prallplatte | 51 | | R | Vorrichtung |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Sortieren von Baumischabfällen (1) und/oder Bauschutt (1), insbesondere Baustellenabfällen,
**dadurch gekennzeichnet,**
**dass** automatisch der angelieferte Baumischabfall (1) und/oder Bauschutt (1) zumindest einem Separator (17) zugeführt wird, wobei mittels Schall und/oder Energieimpuls und/oder zumindest einem Nahinfrarotsortiergerät (16) mineralische Stoffe von den noch enthaltenen nichtmineralischen Stoffen separiert werden oder alle nichtmineralischen Stoffe von den mineralischen Stoffen ausgeschieden werden.

2. Verfahren nach Anspruch 1, **dadurch gekennzeichnet, dass** vor einer Zuführung in zumindest einen Separator (17) automatisch der angelieferte Baumischabfall (1) und/oder Bauschutt (1) einer Absiebung (5) zugeführt wird und dann in eine Feinfraktion (6) und eine Mittelkornfraktion (7) separiert wird, wobei die Absiebung (5) in einer ein- oder mehrstufigen Siebung (5) erfolgt.

3. Verfahren nach Anspruch 2, **dadurch gekennzeichnet, dass** die Absiebung (5) in die Feinfraktion (6) in einem Korngrössenbereich von etwa 5 mm bis 40 mm Durchmesser erfolgt, wobei die Feinfraktion (6) im wesentlichen aus Sand, kleinen mineralischen Anteilen und Resten besteht.

4. Verfahren nach Anspruch 3, **dadurch gekennzeichnet, dass** die Feinfraktion (6) mittels Windsichtern (13) od. dgl. Trenntischen oder Sieben weiter separiert wird, um die Feinfraktion (6) in einzelne getrennte Fraktionen bzw. Stoffe zu separieren.

5. Verfahren nach wenigstens einem der Ansprüche 1 bis 4, **dadurch gekennzeichnet, dass** durch eine ein oder mehrstufige Absiebung (5) eine Mittelkornfraktion (7) von Korngrössen von etwa 40 mm bis 400 mm Durchmesser, bevorzugt von etwa 40 mm bis 300 mm Durchmesser separiert werden.

6. Verfahren nach wenigstens einem der Ansprüche 1 bis 5, **dadurch gekennzeichnet, dass** die Mittelkornfraktion (7) in zwei Fraktionen, vorzugsweise durch Aussiebung unterteilt wird, wobei die erste Mittelkornfraktion (14.1) einen Bereich der Korngrössen von etwa 40 mm bis 120 mm und die zweite Mittelkornfraktion (14.2) einen Bereich von etwa 120 mm bis 400 mm, vorzugsweise 120 mm bis 300 mm Durchmesser separiert wird.

7. Verfahren nach wenigstens einem der Ansprüche 1 bis 6, **dadurch gekennzeichnet, dass** die Mittelkornfraktion (7), insbesondere die in die erste Mittelkornfraktion (14.1) oder zweite Mittelkornfraktion (14.1) separierte Fraktion einer Beschleunigungseinrichtung (15), insbesondere jeweils einem Beschleunigungsband zugeführt werden, welches mit einer Geschwindigkeit von etwa 2 bis 9 m/s, vorzugsweise 3 bis 6 m/s gefahren wird und dort nichtmineralische Anteile automatisch aussortiert werden.

8. Verfahren nach Anspruch 6 oder 7, **dadurch gekennzeichnet, dass** aus der ersten Mittelkornfraktion (14.1) und aus der zweiten Mittelkornfraktion (14.1) die nichtmineralischen Bestandteile mittels Nahinfrarotgeräten (16) aussortiert werden.

9. Verfahren nach wenigstens einem der Ansprüche 6 bis 8, **dadurch gekennzeichnet, dass** aus der ersten Mittelkornfraktion (14.1) und/oder aus der zweiten Mittelkornfraktion (14.2) werthaltige Stoffe und/oder Stoffgemische aussortiert werden, insbesondere mittels Nahinfrarotgeräten (16) od. dgl..

10. Verfahren nach wenigstens einem der Ansprüche 1 bis 9, **dadurch gekennzeichnet, dass** die Mittelkornfraktion (7), und/oder die erste Mittelkornfraktion (14.1) und/oder zweite Mittelkornfraktion (14.2) Sortiergeräten oder Sortiereinrichtungen zugeführt werden, welche mittels Schall und/oder Energieimpuls mineralische Stoffe von den noch enthaltenen nichtmineralischen Stoffen trennen.

11. Verfahren nach wenigstens einem der Ansprüche 1 bis 10, **dadurch gekennzeichnet, dass** die mineralischen Fraktionen (12) anschliessend auf in Reihe geschaltete weitere Separatoren (17) aufgegeben werden, welche mittels Schall und/oder Energieimpuls die Fraktion in unterschiedliche einzelne Materialarten zur Separierung von beispielsweise Beton, Kalk Sandstein, Ziegel, Klinker oder Bimsstein etc. separieren.

12. Verfahren nach wenigstens einem der Ansprüche 1 bis 11, **dadurch gekennzeichnet, dass** vor der Materialaufgabe auf den ersten Separator (17), welcher mittels Nahinfraroteinrichtungen od. dgl. der Messung von Schall und/oder Energieimpulsen arbeitet, Materialien mit einer Korngrösse von oberhalb des Korndurchmessers 400 mm, vorzugsweise oberhalb des Korndurchmessers 300 mm separiert werden.

13. Verfahren nach wenigstens einem der Ansprüche 1 bis 12, **dadurch gekennzeichnet, dass** dem Separator (17), welcher mittels Erkennung von Schall und/oder Energieimpulsen einen Materialstrom separiert, diesem zur Sortierung ein Nahinfrarotgerät (16) nachgeschaltet ist, welches aus dem verbleibenden, nicht inerten Materialgemisch einzelne Werkstoffe zusätzlich aussortiert.

14. Verfahren nach wenigstens einem der Ansprüche 1 bis 13, **dadurch gekennzeichnet, dass** mit einer Mehrzahl von in Reihe geschalteten Separatoren (17) durch Messung von Schall und/oder Energieimpulsen die inerte Fraktion, in einezlne Materialien, wie beispielsweise Stein, Beton, Kalk Sandstein, Ziegel, Klinker, Bimsstein od. dgl. separiert wird.

15. Verfahren nach wenigstens einem der Ansprüche 1 bis 14, **dadurch gekennzeichnet, dass** vor der Erkennung von Schall und/oder Energieimpulsen einzelner Stoffe eine Separation des Materialstromes der nichtmineralischen Bestandteile mittels Nahinfrarotgeräten (16) erfolgt.

16. Vorrichtung zum Sortieren von Baumischabfällen (1) und/oder Bauschutt (1) mit zumindest einem Separator (17) zum Trennen von Materialströmen mittels Schall und/oder Energieimpulsen, **dadurch gekennzeichnet, dass** dem Bereich der Messung von Schall und/oder Energieimpulsen ein Nahinfrarotsortiergerät (16) zur Separierung von einzelnen Werkstoffen aus nicht inerten Materialgemischen vor- und/oder nachgeschaltet ist.

17. Vorrichtung nach Anspruch 16, **dadurch gekennzeichnet, dass** das Nahinfrarotsortiergerät (16) dem Bereich der Erkennung von Schall und/oder Energieimpulsen nachgeschaltet ist, welches aus dem verbleibenden, nicht inerten Materialgemisch einzelne Werkstoffe separiert.

18. Vorrichtung nach Anspruch 16 oder 17, **dadurch gekennzeichnet, dass** vor der Erkennung von Schall und/oder Energieimpulsen im Separator (17) von einzelnen Stoffen eine Separation der nichtmineralischen Bestandteile mittels einer Sortiereinrichtung, insbesondere eines Nahinfrarotsortiergerätes (16) erfolgt.
